Europäisches Patentamt

European Patent Office

Office européen des brevets

(11) Veröffentlichungsnummer: **0 170 899**
A1

(12) EUROPÄISCHE PATENTANMELDUNG

(21) Anmeldenummer: 85108407.9

(22) Anmeldetag: 06.07.85

(51) Int. Cl.⁴: **B 24 B 9/10**, B 24 B 55/02

(30) Priorität: 20.07.84 DE 3426744

(43) Veröffentlichungstag der Anmeldung: 12.02.86
Patentblatt 86/7

(84) Benannte Vertragsstaaten: AT BE CH DE FR GB IT LI LU
SE

(71) Anmelder: FLACHGLAS AKTIENGESELLSCHAFT,
Otto-Seeling-Promenade 10-14, D-8510 Fürth (DE)

(72) Erfinder: Eckardt, Rudolf, August-Oppenberg-Stege 3,
D-4230 Wesel (DE)
Erfinder: Neuendorf, Christoph, Grünstrasse 82 b,
D-4230 Wesel (DE)
Erfinder: Spittka, Horst, Am Neuen Busch 19,
D-4230 Wesel (DE)

(74) Vertreter: Andrejewski, Walter et al, Patentanwälte
Dipl.-Phys. Dr. Walter Andrejewski Dipl.-Ing. Dr.-Ing.
Manfred Honke Dipl.-Phys. Dr. Karl Gerhard Masch
Theaterplatz 3, Postfach 10 12 54, D-4300 Essen 1 (DE)

(54) Verfahren und Maschine zum Kantenschleifen von Modellglasscheiben.

㉗ Verfahren zum Kantenschleifen einer Modellglasscheibe (1) mit einer rotierenden Umfangsschleifscheibe (4) unter Einwirkung eines Kühlflüssigkeitsstrahles (14), wobei der Schleifpunkt (S) zwischen der Modellglasscheibe und der Umfangsschleifscheibe längs des Randes (7) der arbeitenden Umfangsschleifscheibe wandert. Der Kühlflüssigkeitsstrahl wird im wesentlichen auf den Schleifpunkt zwischen der Modellglasscheibe und der Umfangsschleifscheibe gerichtet sowie der Wanderungsbewegung des Schleifpunktes nachgeführt. Offenbart wird auch eine Maschine zur Durchführung eines solchen Verfahrens mit Spindelarm (2) und darin gelagerter Schleifspindel (3) mit Umfangsschleifscheibe (4) sowie mit einer Einrichtung (5) zur Kühlflüssigkeitszuführung zur Umfangsschleifscheibe, wobei die Einrichtung zur Kühlflüssigkeitszuführung zumindest eine Kühlflüssigkeitsaustrittsdüse (6) aufweist und der Spindelarm (2) an eine automatische Schleifwerkzeugsteuereinrichtung (9) angeschlossen ist. Die Einrichtung (5) zur Kühlflüssigkeitszuführung besitzt einen Düsenarm (10), der auf der Schleifspindel (3) gelagert und um die Schleifspindelachse (11) schwenkbar ist. Der Düsenarm (10) besitzt eine Kühlflüssigkeitsaustrittsdüse (6), die auf den Schleifpunkt (5) gerichtet ist.

Der Düsenarm ist fernerhin an eine Kühlungssteuereinrichtung (13) angeschlossen, die den Düsenarm (10) nach Maßgabe der Bewegung des Schleifpunktes (S) auf dem Arbeitsbogen (8) zustellt.

**Andrejewski, Honke & Partner, Patentanwälte in Essen**

"Verfahren und Maschine zum Kantenschleifen von
Modellglasscheiben"

Die Erfindung bezieht sich gattungsgemäß auf ein Verfahren zum Kantenschleifen einer Modellglasscheibe mit einer rotierenden Umfangsschleifscheibe unter Einwirkung eines Kühlflüssigkeitsstromes, wobei der Schleifpunkt zwischen der Modellglasscheibe und der Umfangsschleifscheibe längs des Randes der arbeitenden Umfangsschleifscheibe wandert und der Kühlflüssigkeitsstrahl hauptsächlich tangential auf die Umfangsschleifscheibe gerichtet wird. Die Erfindung bezieht sich fernerhin auf eine Maschine zum Kantenschleifen von Modellglasscheiben nach diesem Verfahren mit Spindelarm und darin gelagerter Schleifspindel mit Umfangsschleifscheibe sowie mit einer Einrichtung zur Kühlflüssigkeitszuführung zur Umfangsschleifscheibe, wobei die Einrichtung zur Kühlflüssigkeitszuführung zumindest eine Kühlflüssigkeitsaustrittsdüse aufweist und der Spindelarm an eine automatische Schleifwerkzeugsteuereinrichtung angeschlossen ist. – Modellglasscheibe bezeichnet im Rahmen der Erfindung Glasscheiben, die einen von der Kreisform abweichenden Umfang aufweisen. Maschinen der beschriebenen Zweckbestimmung und Funktion können im konstruktiven Detail auf verschiedene Weise ausgebildet sein (vergl. DE-OS 28 17 397, EP-A 00 71 541). Die Umfangsschleifscheibe ist im allgemeinen eine Diamantscheibe. Bei all diesen Maßnahmen hängen die Standzeit der Umfangsschleifscheibe, mit der der Schleifvorgang durchgeführt wird, aber auch die Qualität des Schleifvorganges wesentlich von einer wirksamen Kühlung ab.

Im Rahmen der (aus der Praxis) bekannten gattungsgemäßen Maßnahmen wird mit einer Einrichtung zur Kühlflüssigkeitszuführung gearbeitet, die aus einem kreisförmig gebogenen Rohr besteht, welches an einen Verteilerkasten angeschlossen ist.

- 2 -

Das Rohr bzw. der Verteilerkasten weisen eine Mehrzahl von Düsenbohrungen oder eingesetzten Kühlflüssigkeitsaustrittsdüsen auf, die nicht alle tangential auf die Umfangsschleifscheibe gerichtet sind. Die so erreichbare Kühlung ist nur wenig befriedigend. Insbesondere verschlechtert sich die Kühlung, wenn der Schleifpunkt in der beschriebenen Weise wandert und der Kühlflüssigkeitsstrahl folglich den Schleifpunkt nicht mehr ausreichend genau trifft. Zwar könnte man daran denken, diesem Mangel dadurch zu begegnen, daß die Kühlflüssigkeitsmenge erhöht wird. Das stört jedoch aus anderen Gründen.

Der Erfindung liegt die Aufgabe zugrunde, das gattungsgemäße Verfahren so zu führen, daß eine wesentliche Verbesserung der Kühlwirkung erreicht wird, und zwar sogar bei Reduzierung der eingesetzten Kühlflüssigkeitsmenge. Der Erfindung liegt fernerhin die Aufgabe zugrunde, eine Maschine anzugeben, die für das erfindungsgemäße Verfahren besonders geeignet ist.

Zur Lösung dieser Aufgabe lehrt die Erfindung in verfahrensmäßiger Hinsicht zunächst, daß der Flüssigkeitsstrahl im wesentlichen auf den Schleifpunkt zwischen der Modellglasscheibe und der Umfangsschleifscheibe gerichtet und der Wanderbewegung des Schleifpunktes nachgeführt wird. Das läßt sich in vorrichtungsmäßiger Hinsicht auf verschiedene Weise einfach und funktionssicher verwirklichen. Eine bevorzugte Ausführungsform ist dadurch gekennzeichnet, daß die Einrichtung zur Kühlflüssigkeitszuführung einen Düsenarm aufweist, der unmittelbar auf der Schleifspindel gelagert und um die Schleifspindelachse schwenkbar ist, daß der Düsenarm eine Kühlflüssigkeitsaustrittsdüse aufweist, die tangential auf den Schleifpunkt gerichtet ist, und daß der Düsenarm an eine Kühlungssteuereinrichtung angeschlossen ist, die nach Maßgabe der Bewegung des Schleifpunktes auf dem Arbeitsbogen den Düsenarm zustellt. Es versteht sich, daß im Rahmen der Erfindung auch mit zwei Düsenarmen und davon getragenen Kühlflüssigkeitsaustrittsdüsen gearbeitet werden kann, beispielsweise auch so, daß sowohl die in Bewegungsrichtung der Umfangsschleifscheibe als auch die entgegen der Bewegungsrichtung der Diamantscheibe liegende Kehle zwischen Modellglasscheibe und Umfangsschleifscheibe mit der Kühlflüssigkeit beaufschlagt wird, die jedenfalls in feinem Strahl zugeführt wird, so daß nur eine verhältnismäßig geringe Kühlflüssigkeitsmenge erforderlich ist. Überraschenderweise erreicht man bei Einführung der Kühlflüssigkeit in diese Kehle eine sehr intensive Kühlung. Dieser Effekt ist an sich bekannt (DE-OS 31 26 257), konnte jedoch bisher beim Kantenschleifen von Modellglasscheiben und bei gattungsgemäßen Maschinen nicht voll wirksam ausgenutzt werden. Überraschenderweise stellt die Lehre der Erfindung auch sicher, daß der aus der Kühlflüssigkeitsaustrittsdüse bzw. den Kühlflüssigkeitsaustrittsdüsen austretende Kühlflüssigkeitsstrahl bei der beschriebenen Schwenkbewegung des Düsenarms nach Maßgabe der Bewegung des Schleifpunktes auf dem Arbeitsbogen stets hinreichend genau in diese Kehle bzw. in diese Kehlen trifft.

Im einzelnen bestehen im Rahmen der Erfindung mehrere Möglichkeiten der weiteren Ausbildung und Gestaltung. Durch Einfachheit und Funktionssicherheit ausgezeichnet ist eine Ausführungsform, die dadurch gekennzeichnet ist, daß der Düsenarm an einen Zahnkranz angeschlossen ist, der auf der Schleifspindel gelagert ist, und daß auf den Zahnkranz ein Ritzel arbeitet, welches von einem Stellmotor der Kühlungssteuereinrichtung angetrieben ist. Der Düsenarm kann in bezug auf den Arbeitsbogen radial angeordnet sein. Möglich ist jedoch auch eine Ausführungsform, bei der der Düsenarm in bezug auf den Arbeitsbogen und damit seinen Zahnkranz nicht radial, sondern sekantal angeordnet ist.

Im Rahmen der Erfindung kann mit den verschiedensten Kühlungssteuereinrichtungen gearbeitet werden. Eine Ausführungsform ist in diesem Zusammenhang dadurch gekennzeichnet, daß die Kühlungssteuereinrichtung eine Abtasteinrichtung aufweist, die an dem Rand der zu schleifenden Modellglasscheibe anliegt. Ähnliche Abtasteinrichtungen sind an sich bekannt. Eine andere Ausführungsform ist dadurch gekennzeichnet, daß die Kühlungssteuereinrichtung programmgesteuert ist. Arbeitet man mit einer Programmsteuerung und damit mit den Hilfsmitteln der modernen Elektronik, so besteht auch die Möglichkeit, die Schleifwerkzeugsteuereinrichtung und die Kühlungssteuereinrichtung zu koppeln. Im übrigen arbeitet die Erfindung insoweit mit den üblichen Hilfsmitteln der modernen Antriebstechnik und Steuerungstechnik, so daß Einzelheiten dazu nicht der besonderen Erläuterung bedürfen. Im Rahmen der Erfindung liegt es, einen lernfähigen Computer einzusetzen, der die Werte speichert, die sich bei einem ersten Schleifvorgang an einer bestimmten Modellglasscheibe ergeben, wenn die Kühlflüssigkeitsaustrittsdüse und der Düsenarm von Hand gesteuert werden, wobei die gespeicherten Werte danach für eine automatische Steuerung eingesetzt werden, wenn gleiche Modellglasscheiben zu schleifen sind.

— 5 —

Im folgenden wird die Erfindung anhand einer lediglich ein Ausführungsbeispiel darstellenden Zeichnung ausführlicher erläutert.

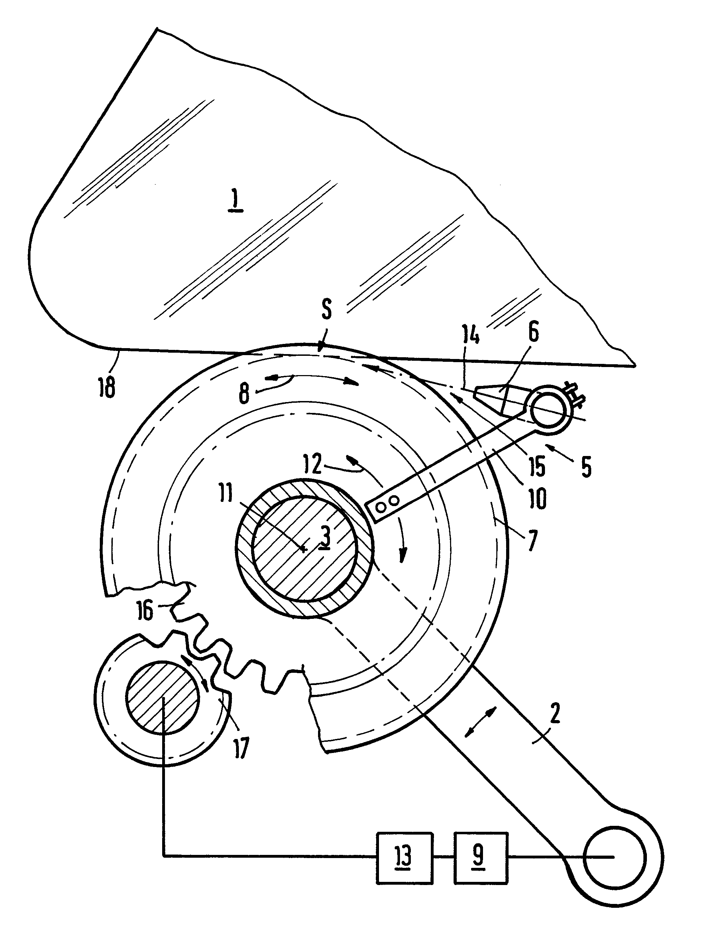

Die einzige Figur zeigt eine Draufsicht auf einen Ausschnitt aus einer erfindungsgemäßen Maschine zum Kantenschleifen von Modellglasscheiben.

In der Figur erkennt man aus einer erfindungsgemäßen Maschine zum Kantenschleifen von Modellglasscheiben 1 einen schwenkbaren Spindelarm 2, eine darin gelagerte vertikale Schleifspindel 3 und eine Umfangsschleifscheibe 4. Man erkennt fernerhin eine Einrichtung 5 zur Kühlflüssigkeitszuführung zum Schleifpunkt, wobei die Einrichtung 5 zur Kühlflüssigkeitszuführung im Ausführungsbeispiel eine Kühlflüssigkeitsaustrittsdüse 6 aufweist und wobei der Schleifpunkt S zwischen Modellglasscheibe 1 und Umfangsschleifscheibe 4 längs des Randes 7 der arbeitenden Umfangsschleifscheibe 4 auf einem Arbeitsbogen 8 wandert, der in der Figur durch einen entsprechenden Doppelpfeil angedeutet wurde. Diese Wanderung geschieht nach Maßgabe der Schwenkbewegung des Spindelarmes 2, der an eine automatische Schleifwerkzeugsteuereinrichtung 9 angeschlossen ist, die den Schleifvorgang insgesamt nach Maßgabe der Geometrie der Modellglasscheibe 1 steuert.

Die Einrichtung 5 zur Kühlflüssigkeitszuführung besitzt einen schwenkbaren Düsenarm 10, der im Ausführungsbeispiel unmittelbar auf der Schleifspindel 3 gelagert und damit um die Schleifspindelachse 11 schwenkbar ist, wie es der Doppelpfeil 12 an dem Düsenarm 10 andeutet. Der Düsenarm 10 trägt eine Kühlflüssigkeitsaustrittsdüse 6, die tangential auf einen auf dem Arbeitsbogen 8 liegenden Schleifpunkt S gerichtet ist. Der Düsenarm 10 ist an eine Kühlungssteuereinrichtung 13 angeschlossen, die in der Figur lediglich im Sinne eines Blockschaltbildes dargestellt ist. Diese Kühlungssteuereinrichtung 13 verschwenkt den Düsenarm 10 nach Maßgabe der Bewegung des Schleifpunktes S auf dem Arbeitsbogen 8, und zwar so, daß der Kühlflüssigkeitsstrahl 14 stets in die Kehle 15 zwischen Modellglasscheibe 1 und Umfangsschleifscheibe 4 trifft, wie es in der Figur dargestellt wurde. Es versteht sich, daß die Kühlflüssigkeitsaustrittsdüse 6 an ihrem Düsenarm 10 einstellbar sein kann.

Im Ausführungsbeispiel und nach bevorzugter Ausführungsform der Erfindung ist der Düsenarm 10 an einen Zahnkranz 16 angeschlossen, der auf der Schleifspindel 3 gelagert ist. Auf den Zahnkranz 16 arbeitet ein Ritzel 17, welches von einem Stellmotor der Kühlungssteuereinrichtung 13 angetrieben ist. Der Düsenarm 10 ist in bezug auf den Arbeitsbogen 8 und damit in bezug auf den vorerwähnten Zahnkranz 16 radial angeordnet. Das trägt dazu bei, daß während der gesamten Schwenkbewegung der Kühlflüssigkeitsstrahl sehr genau in die schon genannte Kehle 18 eintritt. Die Kühlungssteuereinrichtung 13 könnte eine Abtasteinrichtung aufweisen, die an dem Rand 18 der zu schleifenden Modellglasscheibe 1 anliegt. Im Ausführungsbeispiel ist eine Programmsteuerung vorgesehen. Diese ist mit der Schleifwerkzeugsteuereinrichtung 9 gekoppelt, die den Schleifvorgang insgesamt steuert.

- 7 -

Patentansprüche:

1. Verfahren zum Kantenschleifen einer Modellglasscheibe mit einer rotierenden Umfangsschleifscheibe unter Einwirkung eines Kühlflüssigkeitsstrahles,

wobei der Schleifpunkt zwischen der Modellglasscheibe und der Umfangsschleifscheibe längs des Randes der arbeitenden Umfangsschleifscheibe wandert,

und der Kühlflüssigkeitsstrahl hauptsächlich tangential auf die Umfangsschleifscheibe gerichtet ist, d a d u r c h g e k e n n z e i c h n e t, daß der Kühlflüssigkeitsstrahl im wesentlichen auf den Schleifpunkt zwischen der Modellglasscheibe und der Umfangsschleifscheibe gerichtet und der Wanderungsbewegung des Schleifpunktes nachgeführt wird.

2. Maschine zum Kantenschleifen einer Modellglasscheibe nach dem Verfahren gemäß Anspruch 1 mit Spindelarm und darin gelagerter Schleifspindel mit Umfangsschleifscheibe sowie mit einer Einrichtung zur Kühlflüssigkeitszuführung zur Umfangsschleifscheibe, wobei die Einrichtung zur Kühlflüssigkeitszuführung zumindest eine Kühlflüssigkeitsaustrittsdüse aufweist und der Spindelarm an eine automatische Schleifwerkzeugsteuereinrichtung angeschlossen ist, d a d u r c h g e k e n n z e i c h n e t, daß die Einrichtung (5) zur Kühlflüssigkeitszuführung einen Düsenarm (10) aufweist, der auf der Schleifspindel (3) gelagert und um die Schleifspindelachse (11) schwenkbar ist, daß der Düsenarm (10) eine Kühlflüssigkeitsaustrittsdüse (6) besitzt, die auf den Schleifpunkt (S) gerichtet ist, und daß der Düsenarm (10) an eine Kühlungssteuereinrichtung (13) angeschlossen ist, die den Düsenarm (10) nach Maßgabe der Bewegung des Schleifpunktes (S) auf dem Arbeitsbogen (8) zustellt.

3. Maschine nach Anspruch 2, dadurch gekennzeichnet, daß der Düsenarm (10) an einen Zahnkranz (16) angeschlossen ist, der auf der Schleifspindel (3) gelagert ist, und daß auf den Zahnkranz (16) ein Ritzel (17) arbeitet, welches von einem Stellmotor der Kühlungssteuereinrichtung (13) angetrieben ist.

4. Maschine nach einem der Ansprüche 2 oder 3, dadurch gekennzeichnet, daß der Düsenarm (10) in bezug auf den Arbeitsbogen (8) radial angeordnet ist.

5. Maschine nach einem der Ansprüche 2 bis 4, dadurch gekennzeichnet, daß die Kühlungssteuereinrichtung (13) eine Abtastvorrichtung aufweist, die an dem Rand (18) der zu schleifenden Modellglasscheibe (1) anliegt.

6. Maschine nach einem der Ansprüche 2 bis 4, dadurch gekennzeichnet, daß die Kühlungssteuereinrichtung (13) eine Programmsteuerung aufweist.

7. Maschine nach einem der Ansprüche 2 bis 4, insbesondere in der Ausführungsform mit schwenkbarem Düsenarm, dadurch gekennzeichnet, daß die Schleifwerkzeugsteuereinrichtung (9) und die Kühlungssteuereinrichtung (13) gekoppelt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 579 337 (REASER et al.)<br>* Spalte 1, Zeilen 1-4; Spalte 6, zeilen 37-72; Figuren 3,4,18,19 * | 1,2 | B 24 B 9/10<br>B 24 B 55/02 |
| | --- | | |
| A | GB-A-2 079 645 (LITTON INDUSTRIAL PRODUCTS INC.)<br>* Seite 1, Zeilen 22-27,108-125; Figuren 1,2 * | 1 | |
| | --- | | |
| A | DE-C-1 115 610 (FOUQUET)<br>* Anspruch 1 * | 1 | |
| | --- | | |
| A | US-A-2 708 331 (SCHMALTZ)<br>* Anspruch 1; Spalte 3, Zeilen 6-20; Figur 3 * | 1 | |
| | --- | | RECHERCHIERTE SACHGEBIETE (Int. Cl.4) |
| D,A | EP-A-0 071 541 (SAINT-GOBAIN VITRAGE et al.) | | B 24 B 9/10<br>B 24 B 55/02 |
| | --- | | |
| D,A | DE-A-2 817 397 (ZJEDNOCZONE HUTY SZKLA BUDOWLANEGO VITROBUD HUTA SZKLA OKIENNEGO KUNICE) | | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 15-10-1985 | MARTIN A E W |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82